# EUROPEAN PATENT APPLICATION

(11) **EP 1 162 862 A2**
(43) Date of publication of application: **12.12.2001**
(21) Application number: 01440160.8
(22) Date of filing: 08.06.2001
(51) Int. Cl.: H04Q 11/00, H04L 12/56, H04L 29/06

(54) **Optical IP switching router architecture**

(30) Priority: 08.06.2000 US 210187 P
(71) Applicant: ALCATEL, 75008 Paris (FR)
(72) Inventor: An, Ge, Plano, Texas 75025 (US); Lakshman, S. Tamil, Plano, Texas 75093 (US)
(74) Representative: Dreiss, Fuhlendorf, Steimle & Becker

(57) **Abstract**

An optical Internet Protocol switching method and system are disclosed for switching data packets entirely in the optical domain. The method of the present invention includes the steps of receiving a plurality of data packets at an optical switch and extracting the header information for each data packet for processing at a control unit. The data packets can be demultiplexed at a plurality of demultiplexers and each data packet assigned a different internal wavelength. The method of the present invention can route each data packet to one or more delay buffers based on a current output status. The data packets can be combined into a single output from the delay buffers and broadcast to a plurality of outputs channels. The method of the present invention can select one or more data packets to output through at least one of the output channels and can convert the assigned internal wavelengths of the selected data packets to their original wavelength using a tunable wavelength converter. The selected data packets can be multiplexed together for transmission on an output Wave Division Multiplexing ("WDM")fiber.

## Description

### TECHNICAL FIELD OF THE INVENTION

The present invention relates generally to optical network systems and methods and, more particularly, to a system and method for an improved optical Internet Protocol ("IP") switching router architecture.

### BACKGROUND OF THE INVENTION

Data traffic on networks, particularly on the Internet, has increased dramatically over the past several years, and this trend will continue with the introduction of new services that require more bandwidth. The dramatic increase in Internet Protocol ("IP") traffic is leading to a realization that the equipment lines in corporate networks, and in the IP router capacity itself, may not keep up with the demand for more bandwidth. The large volume of Internet traffic requires a network with high capacity switching routers capable of routing data packets with variable lengths and bursty arrival.

Current electronic IP switching routers will become difficult, if not impossible, to scale with the increase in IP traffic. Optical data packet switching routers can overcome the difficulties in electronic routers. In particular, the emergence of dense wavelength division multiplexing ("DWDM") technology has helped to overcome the bandwidth problem encountered by current optical networks. A single DWDM optical fiber can carry in excess of 10 terabits of data per second. However, because current switching technologies are capable of switching data at rates of only 1 to 10 gigabits per second, current optical networks use only a small fraction of the bandwidth available on a single optical fiber.

Different optical data packet switching architectures exist that can provide all optical solutions for fast data packet switching. One approach is the use of a broadcast and select switch. Broadcast and select switches can provide a solution for data packet switching with native broadcast and multicast functions entirely in the optical domain. Broadcast and select switches can have a single wavelength for each input/output fiber. Semiconductor Optical Amplifiers ("SOAs") can be used as gates for selecting data packets to be routed. The selected data packets can be sent to different Fiber-Delay Line ("FDL") buffers. The select matrix at the output of the broadcast and select switch can then choose and forward the data packets for transmission.

Using WDM-based input/output fibers, prior art switching architectures can take advantage of wavelength routing and fast SOA switch blocks to provide data packet switching. Each data packet en an individual wavelength at a fiber can be processed and possibly wavelength-converted before it enters a space switch matrix. A single SOA gate is used to handle each individual wavelength in these architectures to prevent cross talk inside the active components.

However, current broadcast and select switches cannot be directly migrated to a WDM input/output for each port. Other architectures suitable for WDM systems are available, but they do not include broadcast and multicast functions at the switch level. Also, some prior art architectures, such as arrayed waveguide ("AWG") based architectures, use AWG's and Fiber Delay Line buffers for each wavelength channel, which can make for a physically very large switch.

Although approaches other than broadcast and select switches have also been advocated for using optical technology in place of electronic switching systems, the limitations of optical component technology have largely limited optical switching to facility management applications. For example, another approach, called optical burst switch networking, attempts to make the best use of optical and electronic switching technologies. The electronics provide dynamic control of system resources by assigning individual user data bursts to channels of a DWDM fiber, while the optical technology is used to switch the user data channels entirely in the optical domain.

However, previous optical burst switch networks designed to directly handle end-to-end data user channels have been disappointing and have shown the limitations of current optical components. For example, one prior art optical burst switch network utilized ATM switches in the control network that made the design of the control network more complicated and less efficient. Other prior art optical burst switch networks use electronic buffers in the optical routers, thus the optical burst switch network is not entirely optical. Electronic buffers cannot provide end-to-end transparent optical paths for data packet switching.

### SUMMARY OF THE INVENTION

Therefore a need exists for an optical IP switching router architecture that can switch IP data packet payloads in an all-optical manner without converting the entire data packet from an optical to an electric format. By eliminating the optical-to-electric conversion of the entire data packet, the optical IP switching router architecture of the present invention can provide an end-to-end transparent optical path for data packets.

A further need exists for an optical IP switching router architecture with fast data packet switching capability.

A still further need exits for an optical IP switching router architecture that can be directly migrated to a WDM input/output for each switch port.

An even further need exists for a WDM optical IP switching router architecture with the capability to include broadcast and multicast functions at the switch level. Multicast and/or broadcast functions in such a switch can be implemented in either the wavelength domain at the switch input or by a select matrix at the switch output.

A still further need exists for an optical IP switching router architecture that combines optical space switches with optical wavelength converters to improve the flexibility and throughput of optical networks. Such an architecture can provide an optical IP data packet router structure for fast all-optical data packet switching in a WDM system.

An even further need exists for an optical IP switching router architecture that uses WDM at both the switch input and the switch output, and thus provides full wavelength domain flexibility for data packet switching among nodes of core data networks.

A still further need exists for an optical IP switching router architecture that can combine fast SOA gates and wavelength converters at the switch input to resolve conflicts in the wavelength domain. Such an architecture can provide for switching IP data packets in a completely optical manner.

An even further need exists for an optical IP switching router architecture with reduced component requirements and reduced physical size, as compared to previous such architectures.

The present invention provides an optical IP switching system and method that substantially eliminates or reduces disadvantages and problems associated with previously developed systems and methods for switching optical data packets across a network

More specifically, the present invention provides an optical IP switching method and system for switching data packets entirely in the optical domain. The method of the present invention includes the steps of receiving a plurality of data packets at an optical switch and extracting the header information for each data packet for processing at a control unit. The data packets can be demultiplexed at a plurality of demultiplexers and each data packet assigned a different internal wavelength. The method of the present invention can route each data packet to one or more delay buffers based on a current output status. The data packets can be combined into a single output from the delay buffers and broadcast to a plurality of outputs channels. The method of the present invention can select one or more data packets to output through at least one of the output channels and can convert the assigned internal wavelengths of the selected data packets to their original wavelength using a tunable wavelength converter. The selected data packets can be multiplexed together for transmission on an output Wave Division Multiplexing ("WDM")fiber.

The present invention provides an important technical advantage of an optical IP switching router architecture that can switch IP data packet payloads in an all-optical manner.

The present invention provides another technical advantage of an optical IP switching router architecture with fast data packet switching capability.

A still further technical advantage of the optical IP switching router architecture of the present invention is that it can be directly migrated to a WDM input/output for each port.

An even further technical advantage of the optical IP switching router architecture of the present invention is its ability to include broadcast and multicast functions at the switch level.

Yet another technical advantage of the optical IP switching router architecture of the present invention is that it can combine optical switches with optical wavelength converters to improve the flexibility and throughput of optical networks.

Still another technical advantage of the optical IP switching router architecture of the present invention is the ability to use WDM at both the switch input and the switch output to provide full wavelength domain flexibility for data packet switching among nodes of core data networks.

Even further, the optical IP switching router architecture of the present invention provides the technical advantage of combining fast SOA gates and wavelength converters at the switch input to resolve conflicts in the wavelength domain.

Yet another technical advantage of the optical IP switching router architecture of the present invention is its reduced component requirements, which can reduce the physical size of a switching router as compared to previous such architectures.

### BRIEF DESCRIPTION OF THE DRAWINGS

For a more complete understanding of the present invention and the advantages thereof, reference is now made to the following description taken in conjunction with the accompanying drawings in which like reference numerals indicate like features and wherein:
FIGURE 1 is a block diagram of an optical IP switching router incorporating an embodiment of the optical IP switching router architecture of the present invention;
FIGURES 2a and 2b are block diagrams of an embodiment of the present invention that segregates broadcast/multicast functions; and
FIGURE 3 is a close-up block diagram of space switch 18 of the present invention.

### DETAILED DESCRIPTION OF THE INVENTION

Preferred embodiments of the present invention are illustrated in the FIGURES, like numerals being used to refer to like and corresponding parts of the various drawings.

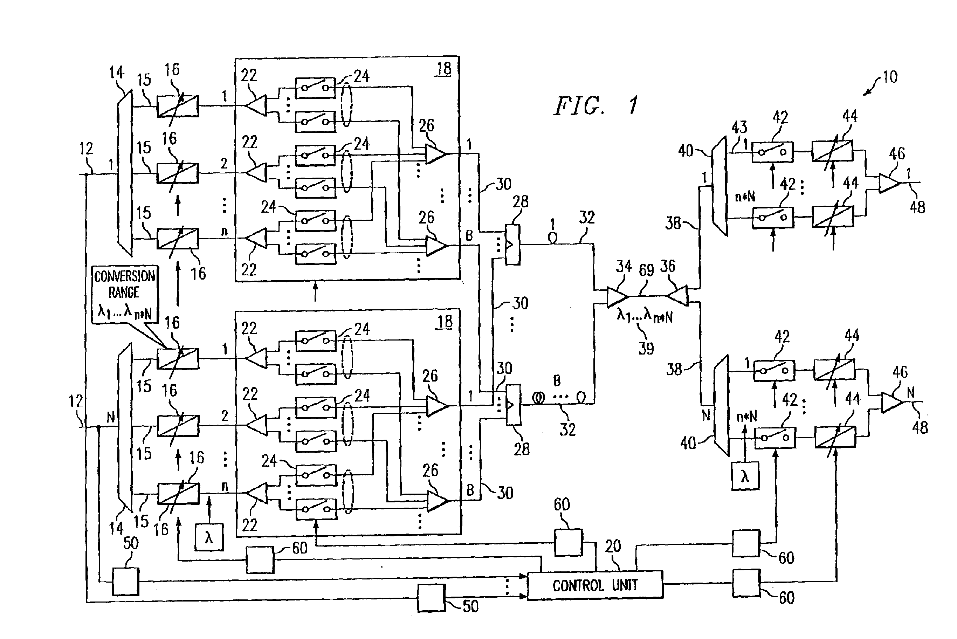

FIGURE 1 shows one embodiment of the optical IP switching router architecture for IP data packet switching of the present invention. Optical switch 10 can have 1 to N input WDM fibers 12, where N is an arbitrary number whose value is only limited by size and technology constraints, as discussed more fully below. Input WDM fibers 12 can carry optical data packets consisting of payload databits and data packet header information. Header information can be extracted and processed electronically via Control Unit 20. The remainder of a data packet can pass through optical switch 10 in an entirely optical format and output from optical switch 10 on one of N output WDM fibers 48. Control Unit 20 can direct the operation of the various components of optical switch 10 to insure the IP data packets are routed to the correct output Control unit 20 can perform this function by updating the control information for input wavelength converters 16, space switches 18, input SOAs 22, output SOAs 42, and output wavelength converters 44.

Input WDM fibers 12 can contain multiple data packets each having different wavelengths as they arrive at input demultiplexers 14. Optical switch 10 can have from 1 to N input demultiplexers, one each corresponding to each of the 1 to N input WDM fibers 12. Input demultiplexers 14 can separate out the multiple wavelength data packets arriving on WDM fibers 12 and can forward each individual wavelength signal (data packet) along a wavelength fiber 15 to an input wavelength converter 16. Incoming data packets can thus be demultiplexed at the input to optical switch 10 and have a different internal wavelength assigned.

Each incoming data packet can be assigned to a different wavelength by input wavelength converters 16. Each input WDM fiber 12 can carry up to n wavelengths that can be assigned to incoming data packets, where n is an arbitrary number determined by the capacity of available switching technology. Because there are up to N WDM fibers 12 and each of the WDM fibers 12 can have up to n wavelengths assigned to it, the total number of possible wavelengths is N x n. Currently, each input WDM fiber 12 can carry up to 32 wavelengths. The optical IP switching router architecture of the present invention, however, is scalable to a greater number of wavelengths.

In the embodiment of the present invention shown in FIGURE 1, input wavelength converters 16 are tunable wavelength converters. However, input wavelength converters 16 can also be fixed wavelength converters. When input wavelength converters 16 are fixed, the wavelength of each data packet coming out of a particular wavelength converter 16 can be a fixed (assigned) wavelength. This provides the capability of being able to carry on the same fiber all of the data packets having a particular wavelength (i.e., the same fiber will always carry the same wavelength data packets). By using fixed wavelength converters 16, it is possible to avoid using a control data input from control unit 20 to control wavelength converters 16, since a given fixed wavelength converter 16 will only convert data packets to a single wavelength. Despite the need for a control signal, however, tunable wavelength converters can provide more expansion capabilities and greater flexibility than fixed wavelength converters.

Tunable input wavelength converters 16 of FIGURE 1 can convert the wavelength of an incoming data packet along wavelength fibers 15 to any internal wavelength (including the same wavelength as the data packet had when arriving at tunable wavelength converter 16). Wavelength conversion can be performed to avoid conflicts that may exist when two or more data packets are destined for the same output. If each of two or more wavelength fibers 15 carry a data packet whose output destination is the same (i.e., each data packet has the same initial wavelength), there exists a potential for a conflict to occur as the data packets are routed to the intended output WDM fiber 48, with a corresponding potential loss of data. To avoid this conflict, one or more tunable wavelength converters 16 can, upon direction from control unit 20, convert the wavelengths of one or more of the same wavelength data packets to different unused wavelength(s).

Conflicts between data packets can occur because all data packets, regardless of which input WDM fiber 12 they arrived on, can be sent along the same path through optical switch 10. Before a data packet is ultimately routed to its respective output, it can potentially conflict with another data packet having the same wavelength. If two or more data packets have the same wavelength upon arrival, tunable input wavelength converter 16 can convert the wavelength of at least one of the data packets to avoid conflict. Thus, two or more data packets having the same initial wavelength can be routed to the same switch output without conflict because at least one data packet's wavelength can be converted to a different, nonconflicting wavelength.

Control unit 20 can provide a control signal to input wavelength converters 16 to control the conversion of data packet wavelengths. Although optical switch 10 is an optical switch architecture, a separate layer of electronics can be used to control optical switch 10. Control unit 20 can provide control information based on extracted header information from each data packet carried on the N WDM input fibers 12.

Header information can be extracted from each data packet before the data packet arrives at input demultiplexers 14. The header information is forwarded to control unit 20 through input optical-to-electric converters 50, which can convert the header information from an optical to an electric format. Control unit 20 can determine from the extracted header information what wavelengths are being used within each input WDM fiber 12. Control unit 20 can provide a control signal to optical switch 10 to route and/or convert the wavelength of the data packet payloads, based on their header information, so that each of the data packet payloads reaches its intended switch output without conflict or loss/corruption of data. If a possibility of overlap/conflict between two or more data packet payloads exists, control unit 20 can issue an appropriate control signal to input wavelength converters 16 to convert the wavelengths of one or more data packet payloads, as discussed above, to avoid the potential conflict. Control unit 20 can track every data packet wavelength so that it does not cause a conversion to occur that avoids one conflict only to cause another. Data packet wavelengths are converted to currently free wavelengths.

At the output of input wavelength converters 16, each data packet payload can have a different wavelength, even if one or more data packet payloads are going to the same optical switch 10 output. In the event that a large number of incoming data packets have the same wavelength and are going to the same switch output, a simple wavelength conversion may not be enough to avoid conflicts. To avoid a conflict, optical switch 10 can also include delay buffers 32 to insert an appropriate delay between one or more of the data packets intended for the same switch output. Delay buffers 32 can be Fiber Delay Line ("FDL") buffers.

Unlike prior art electronic switch routers, the present invention can operate without a dedicated delay buffer for every data packet input fiber coming into optical switch 10, and can thus avoid the additional cost and reduced speed of prior art such systems. Prior art electronic switching systems require an optical-to-electric signal conversion for every channel (wavelength) coming into the switching router. Those prior art systems can extract and process header information to route the data packets, but to do so they must convert the entire data packet into electric form and temporarily store the data packet payload while processing the header information. This is both costly and slow because it requires a separate memory buffer for every wavelength to store the data packet payload while reading the header information.

Because the minimum data packet size is typically fixed, as data transmission speed increases - for example, from the most popular speed today (155 megabytes per second) up to the currently possible 2.5 gigabyte or 10 gigabyte per second speeds - the amount of time that a switching router has to process each individual data packet decreases. Prior art methods that perform an optical-to-electric conversion of the entire data packet become overly problematical as transmission speeds increase due to limits in the data processing speed of prior art switches and routers. Additionally, optical-to-electric conversion is limiting in that individual data packets must be synchronized to recreate each data packet at the output to optical switch 10.

The optical IP switching router architecture of the present invention can avoid these problems by tapping a single channel (wavelength) on each input WDM fiber 12. This channel can contain all of the control information for the input WDM fiber 12. Additionally, the entire process, except for the header information extraction (control information extraction), is entirely optical. Furthermore, extraction of the header information requires manipulation of less data when compared to extraction of the entire data packet. The present invention allows multiple data packet payloads to be processed together in an optical format This can provide the capability for much faster speeds than are possible with current switching technology. The present invention, for example, can process data through-puts in excess of 40 gigabits. The optical IP switching router architecture of the present invention is also transparent, meaning that optical switch 10 can operate independently of data transmission speed.

Extracted header information is reassembled with the its respective data packet payload at the output of optical switch 10. Electric-to-optical converters 60, at the output of control unit 20, can convert the header information back to an optical format to be reassembled with its associated data packet payload. The present invention thus can reduce the number of optical-to-electric conversions (and vice versa) from that of the prior art (one conversion for each wavelength) to just a single conversion for each input WDM fiber 12 to optical switch 10.

From input wavelength converter 16, data packet payloads (each having a different wavelength) can be forwarded to one of 1 to N optical space switches 18. Optical space switches 18 (one for each input WDM fiber 12) are similar to electronic space switches but operate entirely in the optical domain. Optical space switches 18 are shown in FIGURE 1 as nxn space switches, but they can be scaled to fit any switch architecture. A nxn space switch, as shown in FIGURE 1, splits each incoming signal into n signals identical to the incoming signal. As examples, three-by-three, four-by-four, five-by-five (and so on) space switches can split each incoming data packet signal into three, four and five individual signals (and so on), as the case may be.

Input splitters 22 split the incoming signals within optical space switches 18. Optical space switches 18 can have up to n input splitters each, corresponding to the n wavelengths carried on each input WDM fiber 12. Input splitters 22 can split an incoming signal into as many component signals as required by optical space switch 18 (e.g., split into two signals for a nxn optical space switch 18). Once split, each signal can be forwarded to an input Semiconductor Optical Amplifier gate (SOA) 24.

Each input SOA 24 is like an on/off switch that can either pass a signal when "on," or can block a signal from passing when "off." Input SOAs 24 can be controlled by an input signal from control unit 20. Each input SOA 24 can have a driver to control its operation. For example, if the current through an input SOA 24 is one value (e.g., 200 milliamps), then input SOA 24 can become transparent and pass an incoming signal through it. Alternatively, if the current through an input SOA 24 is a lesser value (e.g., 50 milliamps), the input SOA 24 can become obscure and absorb the optical signal, preventing transmission. Input SOAs 24 can provide the capability for fast data packet switching.

Based on a 40-byte data packet (the smallest data packet in the IP format) and a transmission speed of 10 gigabits per second, the time a gate can change state between ON and OFF between data packets is only about five to ten nanoseconds. To provide for fast data packet switching, the state of a switch, such as an input SOA 24, must be changed in that five to ten nanosecond time period. Input SOAs 24 can currently perform this fast data packet switching.

Buffers in fast data packet switching can be used to avoid conflicts between incoming data packets that may have the same optical switch 10 output destination. As discussed previously, conflicts can occur even after wavelength conflicts between incoming data packets have been resolved by input wavelength converters 16. Two or more data packets going to the same switch output, even though they may be assigned different wavelengths, can arrive at optical switch 10 at the same time and hence still have the potential to conflict. To avoid this potential conflict, optical switch 10 can direct one or more of the data packets to different levels of delay in one or more of delay buffers 32. Input SOAs 24, with their capability for fast data packet switching, can be used to direct incoming data packets to different delay buffers 32.

The delay buffer 32 to which a data packet payload is directed determines the amount of delay inserted into that data packet. As shown in FIGURE 1, the output of input SOAs 24 can be forwarded to any one of 1 to B input couplers 26. Input couplers 26 can couple together all of the data packets coming into optical space switches 18 that require the same amount of delay. Input couplers 26 can send the coupled signals to the appropriate delay buffer 32.

Optical switch 10 can have 1 to B delay buffers 32. Thus, each optical space switch 18 can take as inputs up to n input data packet payloads and output up to B coupled signals for delay. There is no particular relationship between n and B. The value of B can be determined by the performance desired from optical switch 10. For example, if the data through-put is 10,000 data packets per second and the maximum acceptable loss desired is one data packet per second, then B may be made equal to, e.g. ten, corresponding to ten possible levels of delay. If out of the 10,000 data packets per second it is acceptable to lose ten data packets per second, then B might be made equal to a single delay buffer (i.e., B=1).

Input couplers 26 forward the coupled data packets requiring the same level of delay to buffer couplers 28. Buffer couplers 28 can couple together the data packets from each of the N optical space switches 18 that require the same amount of delay and forward the coupled data packets to the appropriate delay buffer 32. Buffer couplers 28 can be the same technology as input couplers 26, although perhaps of different sizes. This is because input couplers 26 can couple up to n data packet signals corresponding to the possible n wavelengths of each input WDM fiber 12. Buffer couplers 28, however, must be able to couple a number of data packet inputs equal to N, the number of input WDM fibers 12, since each buffer coupler 28 receives a single signal from each optical space switch 18.

Optical switch 10 can have a number of delay buffers 32 equal to B. The number of delay buffers 32 can be scaled to any number, but is limited by cost of components. This is because as the number of delay buffers 32 increases, the number of input SOAs 24 required also increases. As previously discussed, the number of delay buffers 32 (the value of B) can be determined by the level of performance desired from optical switch 10. Delay buffers 32 can provide an increasing level of delay, with the first delay level being a zero delay. Each subsequent delay buffer 32 can insert an additional unit level of delay, where a unit level of delay can be the average data packet length.

Optical switch 10 can have the same number of delay buffers 32 as buffer couplers 28 and input couplers 26, since the function of buffer couplers 28 and input couplers 26 is to direct data packets requiring the same level of delay to the appropriate delay buffer 32. For example, if 64 wavelengths come into optical space switch 18 and B is equal to five (Le., there are five input couplers 26, five buffer couplers 28 and five levels of delay buffer 32), then there are five outputs from each optical space switch 18. As discussed above, each data packet coming in at a different wavelength can be split into five identical signals by input splitters 22, with each of these five signals requiring an input SOA 24. Optical switch 10's architecture can thus scale to very large component numbers very quickly, since the number of input SOAs 24 required is equal to (n x B).

Once delay buffers 32 have inserted the appropriate level of delay into each of the data packets from input WDM fibers 12, all of the data packets (potentially (n x N) different wavelengths) can be coupled together by buffer output coupler 34 into combined signal 39. Combined signal 39 can be forwarded from buffer output coupler 34 to output splitter 36 along combined fiber 69. Output splitter 36 can split combined signal 39 into its component data packets, at their respective different wavelengths, and forward the data packets onto one of N output fibers 38.

Combined signal 39 from output coupler 34 can carry all data going to all of optical switch 10's outputs (every wavelength data packet). Buffer output coupler 34 can combine all the data packets that at a given time are ready to be forwarded to their respective outputs. For example, if input data packet 1 arrives at optical switch 10 at time t=0, input data packet 2 arrives at time t=1, and input data packet 3 arrives at time t=2, then if input data packet 1 is delayed two delay increments and input data packet 2 is delayed one delay increment and input data packet 3 is not delayed at all, all three data packets will arrive at buffer output coupler 34 at the same time. Buffer output coupler 34 can couple all three data packets into combined signal 39 and forward combined signal 39 to output splitter 36.

One reason for combining all of the data packets into a single combined signal 39 along a combined fiber 69 is that information arriving on distinct input WDM fibers 12 may be needed in a combined form at the output of optical switch 10, along one or more different output WDM fibers 48. Buffer output coupler 34 can provide this function by coupling all of the data packet outputs into combined signal 39. Combined signal 39 can be split along perhaps different parameters and along different output WDM fibers 48 than that on which the data packets originally entered optical switch 10. Information (data packets) that may have arrived at optical switch 10 along distinct input WDM fibers 12 can thus be appropriately delayed and recombined such that information from two or more input WDM fibers 12 can be combined into a single output WDM fiber 48.

Another advantage of combining all of the input data packets, regardless of their wavelength, into a single combined fiber 69 is that it can provide for a multicast/broadcast function, voice over IP, and video on demand. The optical IP switching router architecture of the present invention can provide these functions because coupling together the information coming into optical switch 10 into a combined fiber 69 allows every output from optical switch 10 to selectively receive all or part of the information carried on combined fiber 69. Combined signal 39 need not be separately assigned to each switch output, but instead can serve as a source feed that every switch output can tap into. All or part of combined signal 39 can thus be routed to any or all switch outputs.

Combined signal 39 can be forwarded by buffer output coupler 34 to output splitter 36, which can split combined signal 39 into N individual signals having the same information as combined signal 39 and each carried on N output channels 38. Output channels 38 can feed into N output demultiplexers 40. Each output demultiplexer 40 can thus receive all the data coming into optical switch 10.

Output demultiplexers 40, one for each of the N output WDM fibers 48, can separate out the different wavelengths carried within combined signal 39. On the downstream side of output demultiplexer 40s there can be up to (n x N) individual fibers 43, one for each of the possible (n x N) different data packet wavelengths. On each individual fiber 43 there can be an output SOA 42 followed by an output wavelength converter 44. Control unit 20 can provide a control signal to output SOAs 42 such that, in the same manner discussed for input SOAs 24, a particular wavelength can either be allowed to pass through or can be absorbed.

Each signal allowed to pass through an output SOA 42 can be forwarded to an output wavelength converter 44. Output wavelength converters 44 are tunable wavelength converters. Output wavelength converters 44 perform the same function as input wavelength converters 16 and can convert the wavelength of a particular data packet. In particular, output wavelength converters 44 can convert the wavelength of a data packet at the output of optical switch 10 back to the original wavelength that data packet had at the input to optical switch 10. At output couplers 46, all of the wavelengths selected by control unit 20 through output SOAs 42 to comprise the signal for a particular output WDM fiber 48 are combined and forwarded from optical switch 10 along output WDM fibers 48.

On average, the number of inputs into output demultiplexers 40 equals the number of outputs from output coupler 46. However, the number can differ at a particular point in time, depending on which wavelengths are allowed to go through, and which wavelengths are blocked by, output SOAs 42. As previously discussed, data packets arriving at optical switch 10 along different input WDM fibers 12 can be combined at the output of optical switch 10 onto one or more output WDM fibers 48. For example, a data packet could arrive at optical switch 10 along a single fiber (e.g., fiber 1) and be split and selected for output along every output WDM fiber 48. This is one example of a multicast function data packet.

In prior art switching architectures, bottlenecks can occur at the output of a coupler, such as buffer output coupler 34, because the output from the combined delay buffers 32 can have up to (n x N) wavelengths. Current switching technology is only capable of a total of 32 wavelengths on a single fiber, which limits the number of input WDM fibers 12 that can be used depending on the number of wavelengths per fiber. In the embodiment of this invention shown in FIGURE 1, however, optical switch 10 can potentially process 256 different wavelengths per internal fiber. Therefore, if each input WDM fiber 12 can hold 32 wavelengths (n), then N can be equal to eight (i.e., there can be eight input WDM fibers 12). Furthermore, the optical IP switching router architecture of the present invention, because of its transparency to transmission speed, can be scaled up to some five to six terrabits per second. The capacity of the present invention is thus dependent upon, and limited by, the capacity of input WDM fibers 12 and output WDM fibers 48. However, even with the current limitation of 32 wavelengths per fiber, the number of input WDM fibers 12 can be increased using the present invention.

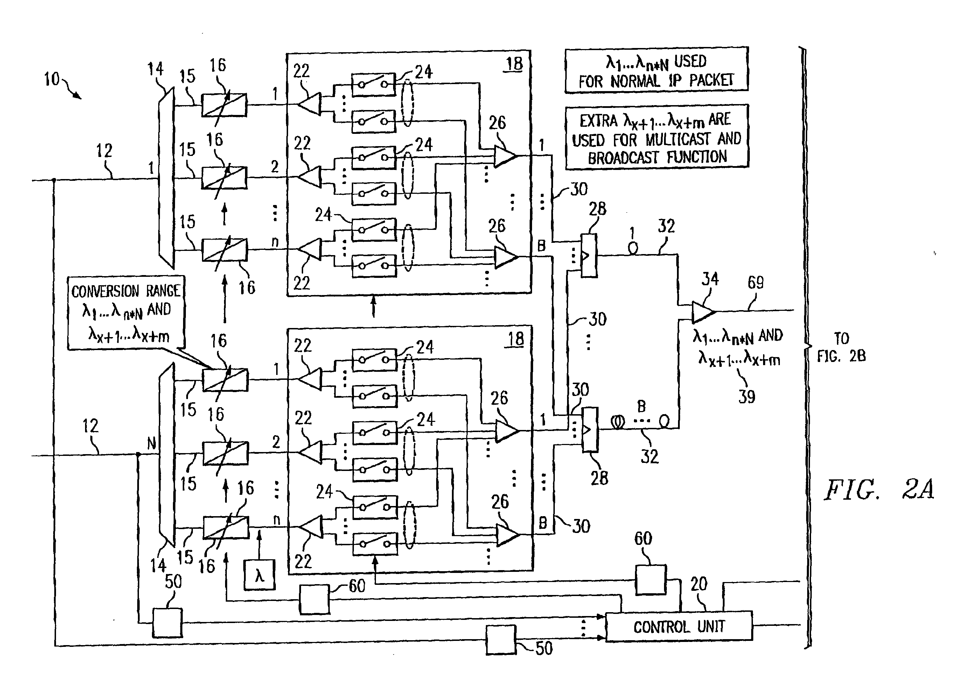

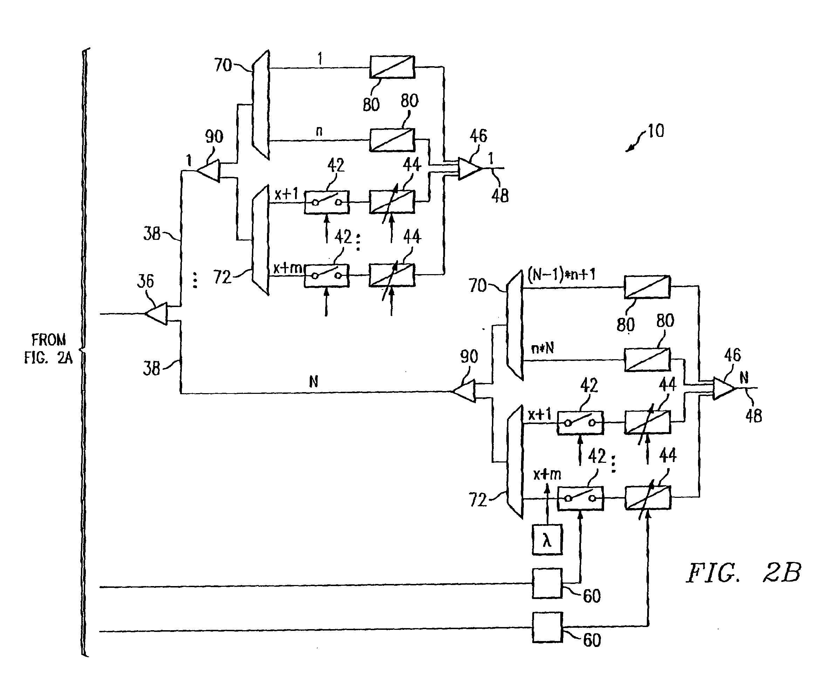

FIGURES 2a and 2b show another embodiment of the optical IP switching router architecture of the present invention. The embodiment of FIGURES 2a and 2b performs the same function as the embodiment of this invention shown in FIGURE 1. However, the embodiment of FIGURES 2a and 2b has reduced component requirements. The embodiment of the present invention shown in FIGURES 2a and 2b can assign separate wavelengths to the multicast and broadcast functions at the input to optical switch 10. A smaller number of output SOAs 42 can then be used as compared to the embodiment of FIGURE 1. Further, the number of tunable output wavelength converters 44 can likewise be reduced.

Because broadcast and multicast functions are not needed at all times, the embodiment of the optical IP switching router architecture of the present invention shown in FIGURES 2a and 2b can assign specific wavelengths to those functions. The embodiment of FIGURES 2a and 2b has limited broadcast and multicast functions as compared to the embodiment of FIGURE 1 because not all data packets can be routed along all fibers. Broadcast and multicast data packets are instead segregated in the output channels (prior to output couplers 46) from unicast data packets. However, this is compensated for by the decrease in component costs. Dedicated wavelengths can be assigned to broadcast and multicast data packets because only about 10% to 20% of the total data transmitted through optical switch 10 at a given time is broadcast or multicast data.

The embodiment of the present invention shown in FIGURES 2a and 2b is essentially identical to the embodiment shown in FIGURE 1 up to buffer output coupler 34. An exception is that input wavelength converters 16 must be tunable wavelength converters in the embodiment shown in FIGURES 2a and 2b. Additionally, the embodiment of FIGURES 2a and 2b typically requires more wavelengths be available than in the embodiment of FIGURE 1. These additional wavelengths are labeled in FIGURES 2a and 2b as λₓ₊₁ up to λₓ₊ₘ, where m is an arbitrary. number chosen to satisfy the data throughput needs of the broadcast and multicast functions. The total number of wavelengths carried over optical switch 10 is therefore (N x n)+(m).

On the downstream side of buffer output coupler 34 there are several differences in the embodiment of the present invention shown in FIGURES 2a and 2b from the embodiment of FIGURE 1. Data packets arriving at input demultiplexers 14 along input WDM fibers 12 can be sent along wavelength fibers 15 to input wavelength converters 16 in the same manner as discussed above for FIGURE 1. However, input wavelength converters 16 of FIGURES 2a and 2b serve the additional function of assigning one set of wavelengths to normal (unicast) IP data packets, and a different set of wavelengths to multicast and broadcast function data packets.

Data packets arriving at tunable wavelength converters 16 can thus be assigned a wavelength dependent upon their intended optical switch 10 output This can be accomplished by assigning only certain different internal wavelengths to each of output WDM fibers 48. When a data packet arrives at optical switch 10 intended for a particular output WDM fiber 48, one of the wavelengths set aside for that output WDM fiber 48 can be assigned to the data packet. If a subsequent data packet for the same output WDM fiber 48 arrives at optical switch 10, another free wavelength set aside for that output WDM fiber 48 can be assigned to the subsequent data packet, and so on. Otherwise, the operation of the embodiment of optical switch 10 of the present invention shown in FIGURES 2a and 2b is substantially the same as described for the embodiment of optical switch 10 shown in FIGURE 1.

Output demultiplexers 40 can direct each data packet (wavelength) to the appropriate output WDM fiber 48. Control unit 20 can provide the control signals to perform these data traffic routing functions. In this way, depending on the data packet type (e.g., whether it is a unicast or multicast/broadcast data packet), data packets can be converted to different wavelength groups, group, e.g, unicast in 1 to Nxn and multicast from x to x+m, for routing to a particular output WDM fiber 48. One set of wavelengths can be set aside for unicast data packets, based on the unicast data packet's intended output WDM fiber 48. Similarly, another different set of wavelengths can be reserved for multicast/broadcast traffic. The total number of wavelengths is (N x n) + (m), where (N x n) wavelengths are for unicast traffic and (m) wavelengths are for multicast/broadcast traffic. For. example, for unicast traffic, a first output WDM fiber 48 can be assigned wavelengths 1 to n, a second output WDM fiber 48 can be assigned wavelengths (n+1) to (2 x n), and so on, up to the N^{th} output WDM fiber 48. The N^{th} output WDM fiber 48 can be assigned wavelengths [(N-1) x (n+1)] to (N x n).

The output matrix for optical switch 10 can thus be made very simple and avoid the use of additional output SOAs 42 and output tunable wavelength converters 44 for the processing of unicast traffic. For multicast/broadcast data packets, wavelengths between x and (x+m) can be assigned to the data packets and the data packets broadcast to all output WDM fibers 48 in a manner similar to that discussed for the embodiment of FIGURE 1.

FIGURES 2a and 2b also can include up to N subsplitters 90 downstream of output splitter 36. Subsplitters 90 can split combined signal 39 (which can include additional wavelengths λₓ₊₁ up to λₓ₊ₘ) into two signals, one going to unicast demultiplexers 70, the other going to broadcast demultiplexers 72. Unicast demultiplexers 70 and broadcast demultiplexer 72 can discriminate based on wavelength. Unicast demultiplexers 70 can separate out all of the unicast wavelengths from combined signal 39 and forward them to fixed output wavelength converters 80. Similarly broadcast demultiplexers 72 can filter out the broadcast/multicast data packet wavelengths and forward the respective data packets to output SOAs 42.

Unicast data packets can thus be sent directly to their intended output WDM fiber 48 based on their assigned wavelength. Each output WDM fiber 48 has its assigned wavelengths, which are the only wavelengths allowed through by the respective unicast demultiplexer 70. The data packets output from fixed output wavelength converters 80 can be coupled together by output couplers 46 and transmitted as an output from optical switch 10 along their respective output WDM fiber 48. Control unit 20 need not provide an input to the output portion of optical switch 10 to control the routing of the unicast data packets because they have been pre-selected at the input to optical switch 10 to go to a particular output WDM fiber 48. The unicast data packets can be routed automatically through the operation of unicast demultiplexers 70. Unicast demultiplexers 70 and broadcast demultiplexers 72 can be broadband filters that allow through only certain wavelengths.

Output SOAs 42 and output tunable wavelength converters 44 of FIGURES 2a and 2b perform the same function as in the embodiment of the present invention shown in FIGURE 1. Control unit 20 can likewise provide a control signal input to output SOAs 42 and output wavelength converters 44 to control which broadcast/multicast data packets are allowed through output SOAs 42. Broadcast/multicast data packets allowed through output SOAs 42 can have their wavelengths converted by output tunable wavelength converters 44 to avoid conflicts in the same manner as discussed above with regards to FIGURE 1. Data packets allowed through output SOAs 42 can be broadcast to every output WDM fiber 48.

The embodiments of the present invention shown in FIGURE 1 and FIGURES 2a and 2b can both provide transparent optical data packet switching for internet traffic. They also can both provide multicast and broadcast functionality at the switch level. The active components in optical switch 10 of either embodiment can handle one wavelength at a time to reduce the cross-talk among channels.

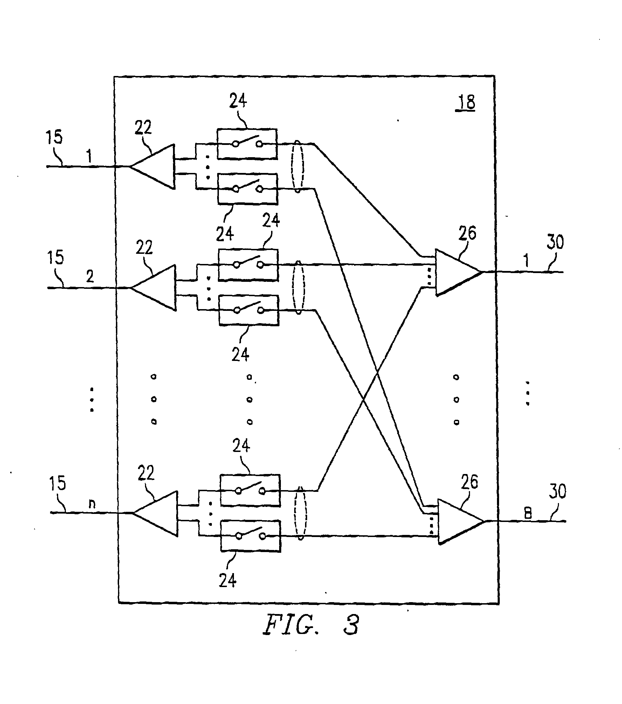

FIGURE 3 is a close-up block diagram of an optical space switch 18 of the present invention as shown in FIGURE 1 and FIGURES 2a and 2b. Wavelength fibers 15 enter optical space switch 18 and progress through input splitter 22, input SOAs 24, and input couplers 26, as described above as part of FIGURE 1. The operation of optical space switch 18 can be controlled by control unit 20 as previously described.

Although the present invention has been described in detail herein with reference to the illustrative embodiments, it should be understood that the description is by way of example only and is not to be construed in a limiting sense. It is to be further understood, therefore, that numerous changes in the details of the embodiments of this invention and additional embodiments of this invention will be apparent to, and may be made by, persons of ordinary skill in the art having reference to this description. It is contemplated that all such changes and additional embodiments are within the spirit and true scope of this invention as claimed below.

## Claims

1. An optical IP switching method, comprising the steps of:
receiving a plurality of optical data packets at an optical switch, wherein each data packet has a payload and header information;
extracting the header information from each of said plurality of data packets;
converting the header information for each of said plurality of data packets from an optical format to an electric format;
processing the header information for each of said plurality of data packets at a control unit to generate control signals to control data packet payload routing through the optical switch;
routing the payload from each of said plurality of data packets through the optical switch in an all-optical manner to at least one desired switch output;
converting the header information for each of said plurality of data packets back to an optical format; and
recombining the payload and header information for each of said plurality of data packets for transmission on at least one output fiber from said at least one desired switch output.

2. The method of Claim 1, wherein said routing step further comprises:
demultiplexing said plurality of data packet payloads at a plurality of demultiplexers;
assigning each of said plurality of data packet payloads an internal wavelength;
forwarding each of said plurality of data packet payloads to one or more delay buffers based on a current output status;
combining said plurality of data packet payloads at the output of said one or more delay buffers and broadcasting said combined plurality of data packet payloads to a plurality of outputs;
selecting one or more data packet payloads from said combined plurality of data packet payloads to output through at least one of said plurality of outputs;
converting said internal wavelength of said selected one or more data packet payloads using a tunable wavelength converter; and
multiplexing said selected one or more data packet payloads together for transmission on an output fiber from said at least one of said plurality of outputs.

3. The method of Claim 2, wherein said demultiplexing step further comprises demultiplexing said plurality of data packet payloads based on wavelength.

4. The method of Claim 2, wherein said assigning step comprises converting an original wavelength of each of said plurality of data packet payloads to said internal wavelength using a wavelength converter.

5. The method of Claim 4, wherein said wavelength converter is a tunable wavelength converter.

6. The method of Claim 4, wherein said wavelength converter is a fixed wavelength converter.

7. The method of Claim 4, wherein said internal wavelength is the same wavelength as the original wavelength.

8. The method of Claim 4, wherein each data packet payload is assigned a different internal wavelength.

9. The method of Claim 2, wherein said forwarding step further comprises:
splitting each of said plurality of data packet payloads into a second plurality of data packet payloads, wherein each of said second plurality of data packet payloads is identical to the split data packet payload; and
selecting and forwarding to one of said one or more delay buffers one of said second plurality of data packet payloads for said each of said plurality of data packet payloads that is split.

10. The method of Claim 9, wherein said current output status is an intended output port for said each of said plurality of data packet payloads.

11. The method of Claim 9, wherein said selecting step further comprises selecting one of said second plurality of data packet payloads using a Semiconductor Optical Amplifier ("SOA") gate.

12. The method of Claim 11, wherein said splitting and said selecting and forwarding steps occur at an optical space switch.

13. The method of Claim 2, wherein said one or more delay buffers are fiber delay line buffers.

14. The method of Claim 2, wherein one of said one or more delay buffers provides zero delay.

15. The method of Claim 2, wherein each of said one or more delay buffers provides a delay of one or more unit increments.

16. The method of Claim 15, wherein said one or more unit increments are equal to the average size of said plurality of data packet payloads.

17. The method of Claim 2, wherein said combining step further comprises combining all of said plurality of data packet payloads into a single combined output signal.

18. The method of Claim 17, wherein said single combined output signal is broadcast to said plurality of outputs for providing broadcast and multicast capability, voiceover IP and video-on-demand.

19. The method of Claim 17, wherein said selecting step comprises demultiplexing said combined output signal based on wavelength.

20. The method of Claim 1, wherein said first converting step further comprises converting the header information from each of said plurality of data packets using a plurality of optical-to-electric converters.

21. The method of Claim 20, wherein said control unit further comprises software instructions to control functionality of said control unit.

22. The method of Claim 20, wherein said control unit provides a control signal based on the header information to control the routing of said plurality of data packet payloads through said optical switch.

23. The method of Claim 1, wherein said second converting step further comprises converting the extracted header information from an electric format to an optical format using a plurality of electric-to-optical converters.

24. The method of Claim 1, wherein said receiving step further comprises receiving a plurality of data packets at an optical switch along one or more input fibers.

25. The method of Claim 24, wherein said optical switch is a wave division multiplexing ("WDM") switching router and wherein said one or more input fibers and said at least one output fiber are WDM fibers.

26. The method of Claim 25, wherein one or more of said plurality of data packets are received at said optical switch along a common one of said on or more input fibers and transmitted from said optical switch along a plurality of different output fibers.

27. The method of Claim 1, wherein said optical switch is independent of the rate of transmission of said plurality of data packets.

28. An optical IP switching router, comprising:
a plurality of input demultiplexers for receiving a plurality of optical data packets and demultiplexing the payloads of said plurality of data packets;
a plurality of optical-to-electric converters for converting header information from each of said plurality of data packets into electric form;
a control unit for processing said converted header information and generating control signals to control data packet payload routing through said optical IP switching router;
a plurality of input wavelength converters for assigning each of said plurality of data packet payloads an internal wavelength;
a plurality of optical space switches for routing each of said plurality of data packet payloads to one of one or more couplers based on a current output status, said one or more couplers for coupling and routing at least one of said each of said plurality of data packet payloads to one of one or more delay buffers;
a buffer coupler for combining said plurality of data packet payloads into a combined output from said one or more delay buffers;
an output splitter for broadcasting said combined output to a plurality of output channels;
an output demultiplexer for each of said plurality of output channels for demultiplexing each of said broadcast combined outputs;
a plurality of output SOA's for selecting one or more data packet payloads from said plurality of data packet payloads for transmission through at least one of said plurality of output channels;
a plurality of tunable wavelength converters for converting said internal wavelength of said selected one or more data packets;
a plurality of electric-to-optical converters for converting said electric form header information back to optical form for recombining said header information with its respective data packet payload; and
a plurality of multiplexers for multiplexing said selected one or more data packets together for transmission out of said at least one of said plurality of output channels on an output fiber.

29. The router of Claim 28, wherein said demultiplexers demultiplex said plurality of data packet payloads based on wavelength.

30. The router of Claim 28, wherein said input wavelength converters assign a different internal wavelength to each of said plurality of data packet payloads.

31. The router of Claim 28, wherein said plurality of input wavelength converters are tunable wavelength converters.

32. The router of Claim 28, wherein said plurality of input wavelength converters are fixed wavelength converters.

33. The router of Claim 28, wherein said plurality of optical space switches each comprise;
a plurality of input splitters for splitting each of said plurality of data packet payloads into a second plurality of data packet payloads, wherein each of said second plurality of data packet payloads is identical to the split data packet payload; and
a plurality of input SOA's for selecting and forwarding to one of said one or more couplers one of said second plurality of data packet payloads for said each of said plurality of data packet payloads that is split.

34. The router of Claim 28, wherein said current output status is an intended output port for said each of said plurality of data packets.

35. The router of Claim 28, wherein said control unit further comprises software instructions to control functionality of said control unit.

36. The router of Claim 28, wherein said one or more delay buffers are optical fiber delay line buffers.

37. The router of Claim 28, wherein one of said one or more delay buffers provides zero delay.

38. The router of Claim 28, wherein each of said one or more delay buffers provide a delay of one or more unit increments.

39. The router of Claim 38, wherein said one or more unit increments are equal to the average size of said plurality of data packets.

40. The router of Claim 28, wherein said optical IP switching router is independent of the rate of transmission of said plurality of data packets.

41. The router of Claim 28, wherein said optical IP switching router provides broadcast and multicast capability, voiceover IP and video-on-demand.

42. An optical IP router switching method using wavelength domain multiplexing to provide multicast and broadcast functions, comprising the steps of:
receiving a plurality of optical data packets at an optical switch, wherein each data packet has a payload and header information;
extracting the header information from each of said plurality of data packets;
converting the header information for each of said plurality of data packets from an optical format to an electric format;
processing the header information for each of said plurality of data packets at a control unit to generate control signals to control data packet payload routing through the optical switch;
routing the payload from each of said plurality of data packets through the optical switch in an all-optical manner, based on whether the payload is a unicast data packet payload or a broadcast/multicast data packet payload, to at least one desired switch output;
converting the header information for each of said plurality of data packets back to an optical format; and
recombining the payload and header information for each of said plurality of data packets for transmission on at least one output fiber from said at least one desired switch output.

43. The method of Claim 42, wherein said routing step further comprises:
demultiplexing said plurality of data packet payloads at a plurality of demultiplexers;
assigning each of said plurality of data packet payloads an internal wavelength based on whether said each of said plurality of data packet payloads is a unicast data packet payload or a broadcast/multicast data packet payload;
forwarding each of said plurality of data packet payloads to one or more delay buffers based on a current output status;
combining said plurality of data packet payloads at the output of said one or more delay buffers and broadcasting said combined plurality of data packet payloads to a plurality of output channels;
selecting one or more unicast data packet payloads from said combined plurality of data packet payloads to output through at least one of said plurality of output channels;
selecting none or more broadcast/multicast data packet payloads from said combined plurality of data packet payloads to output through at least one of said plurality of output channels using a plurality of output SOAs;
converting said internal wavelength of said selected one or more broadcast/multicast data packet payloads using a tunable wavelength converter; and
multiplexing said selected one or more unicast data packet payloads together with said selected none or more broadcast/multicast data packet payloads for transmission on an output fiber from said at least one of said plurality of output channels.

44. The method of Claim 43, wherein said demultiplexing step further comprises demultiplexing said plurality of data packet payloads based on wavelength.

45. The method of Claim 43, wherein said assigning step comprises converting an original wavelength of each of said plurality of data packet payloads to said internal wavelength using a tunable wavelength converter, and where said internal wavelengths are unique for unicast data packet payloads and for broadcast/multicast data packet payloads.

46. The method of Claim 43, wherein said forwarding step further comprises:
splitting each of said plurality of data packet payloads into a second plurality of data packet payloads, wherein each of said second plurality of data packet payloads is identical to the split data packet payload; and
selecting and forwarding to one of said one or more delay buffers one of said second plurality of data packet payloads for said each of said plurality of data packet payloads that is split,

47. The method of Claim 46, wherein said current output status is an intended output port for said each of said plurality of data packet payloads.

48. The method of Claim 46, wherein said selecting step further comprises selecting one of said second plurality of data packet payloads using a Semiconductor Optical Amplifier ("SOA") gate.

49. The method of Claim 48, wherein said splitting and said selecting and forwarding steps occur at an optical space switch.

50. The method of Claim 43, wherein said one or more delay buffers are fiber delay line buffers.

51. The method of Claim 42, wherein said first converting step further comprises converting the header information from each of said plurality of data packets using a plurality of optical-to-electric converters, and wherein said second converting step further comprises converting the extracted header information from an electric format to an optical format using a plurality of electric-to-optical converters.

52. The method of Claim 51, wherein said control unit further comprises software instructions to control functionality of said control unit.

53. The method of Claim 51, wherein said control unit provides a control signal based on the header information to control the routing of said plurality of data packet payloads through said optical switch.

54. The method of Claim 42, wherein said receiving step further comprises receiving a plurality of data packets at an optical switch along one or more input fibers.

55. The method of Claim 54, wherein said optical switch is a wave division multiplexing ("WDM") switching router and wherein said one or more input fibers and said at least one output fiber are WDM fibers.

56. The method of Claim 55, wherein one or more of said plurality of data packets are received at said optical switch along a common one of said on or more input fibers and transmitted from said optical switch along a plurality of different output fibers.

57. An optical IP switching router using wavelength domain multiplexing to provide multicast and broadcast functions, comprising:
a plurality of input demulfiplexers for receiving a plurality of optical data packets and demultiplexing the payloads of said plurality of data packets;
a plurality of optical-to-electric converters for converting header information from each of said plurality of data packets into electric form;
a control unit for processing said converted header information and generating control signals to control data packet payload routing through said optical IP switching router,
a plurality of input tunable wavelength converters for assigning each of said plurality of data packet payloads an internal wavelength based on whether said each of said plurality of data packets is a unicast data packet or a broadcast/multicast data packet;
a plurality of optical space switches for routing each of said plurality of data packet payloads to one of one or more couplers based on a current output status, said one or more couplers for coupling and routing at least one of said each of said plurality of data packet payloads to one of one or more delay buffers;
a buffer coupler for combining said plurality of data packets into a combined output from said one or more delay buffers;
an output splitter for broadcasting said combined output to a plurality of output channels;
a unicast demultiplexer for each of said plurality of output channels for demultiplexing out of said broadcast combined output one or more unicast data packet payloads;
a plurality of fixed wavelength converters for converting the wavelength of each of said one or more unicast data packet payloads;
a broadcast demultiplexer for each of said plurality of output channels for demultiplexing out of said broadcast combined output one or more broadcast/multicast data packet payloads;
a plurality of output SOA's for selecting one or more broadcast/multicast data packet payloads from said one or more broadcast/malticast data packet payloads for transmission through at least one of said plurality of output channels;
a plurality of tunable wavelength converters for converting said internal wavelength of said selected one or more broadcast/multicast data packet payloads;
a plurality of electric-to-optical converters for converting said electric form header information back to optical form for recombining said header information with its respective data packet payload; and
a multiplexer for each of said plurality of output channels for multiplexing said selected one or more broadcast/multicast data packets together with said one or more unicast data packets for transmission out of said at least one of said plurality of output channels on an output WDM fiber.

58. The router of Claim 57, wherein said demultiplexers demultiplex said plurality of data packet payloads based on wavelength.

59. The router of Claim 57, wherein said control unit further comprises software instructions to control functionality of said control unit.

60. The router of Claim 57, wherein said control unit provides a control signal based on the header information to control the routing of said plurality of data packet payloads through said optical IP switching router.

61. The router of Claim 57, wherein said one or more delay buffers are fiber delay line buffers.
